# EUROPEAN PATENT SPECIFICATION

(11) **EP 2 310 189 B1**
(45) Date of publication and mention of the grant of the patent: **28.01.2015**
(21) Application number: 09786527.3
(22) Date of filing: 06.07.2009
(51) Int. Cl.: B29C 67/24, C04B 26/10, C04B 26/18, B28B 11/24, B28B 3/02, B28B 5/02

(54) **A METHOD FOR OBTAINING A MIXTURE FOR PRODUCTION OF HANDMADE ARTICLES SUITABLE FOR COVERING OR FORMING SURFACES AND A MIXTURE OBTAINED BY THE METHOD**
VERFAHREN ZUR GEWINNUNG EINER MISCHUNG FÜR DIE HERSTELLUNG HANDGEFERTIGTER ARTIKEL ZUR BESCHICHTUNG ODER BILDUNG VON OBERFLÄCHEN UND ANHAND DIESES VERFAHRENS GEWONNENE MISCHUNG
PROCÉDÉ D OBTENTION D UN MÉLANGE SERVANT À PRODUIRE DES ARTICLES FAITS MAIN, APPROPRIÉ POUR FORMER DES REVÊTEMENTS OU DES SURFACES, ET MÉLANGE OBTENU PAR LE PROCÉDÉ

(30) Priority: 07.07.2008 IT PS20080020; 24.10.2008 IT PS20080023; 16.12.2008 IT PS20080026
(43) Date of publication of application: 20.04.2011
(60) Divisional application: 13003706.2
(73) Proprietor: Canti, Max, 61012 Gradara (PU) (IT)
(72) Inventor: Canti, Max, 61012 Gradara (PU) (IT)
(74) Representative: Bergamini, Silvio
(86) International application number: PCT/IB2009/052941
(87) International publication number: WO 2010/004505

(56) References cited:
- WO-A-95/13178
- GB-A- 2 197 673
- US-A- 3 705 830
- US-A- 3 850 558

## Description

### Field of the invention

The invention relates to a process of making a mixture for the manufacture of surface covering or forming products using materials that are ordinarily used in industrial dry painting processes, mixed with inert materials thereby reducing or eliminating the problem of frequent scaling and accurate cleaning of the manufacturing equipement.

### Background art

The closest prior art of this invention is described in Patent Application ITPS20080008, "Processo per ottenere una lastra di materiale lapideo conglomerato per rivestimento o calpestio e prodotti con esso ottenuti" (Process of making a slab of conglomerate stone material for use as a covering or a walkway and products obtained therefrom).

This invention discloses the addition of a thermosetting powder to a mixture of inert materials and a liquid two-component resin matrix, as typically used for making surface covering products.

Then, the mixture is introduced into a die of a press, which is also equipped with a heating device that can heat the mixture in the die as the products are formed, and cause matrix curing.

However, the use of resin matrices causes fouling of product manufacturing equipment, thereby requiring frequent scaling and accurate cleaning thereof.

Such cleaning and maintenance processes require the product manufacturing cycle to be shut down, thereby involving high manufacturing costs due to long processing cycle times.

The addition of a thermosetting powder to the mixture of inert materials and resin matrices, as taught in ITPS20080008 partially solved the equipment fouling problem, and provided a high throughput manufacturing process, while obviating the actuator fouling problem, by providing a less fouling or totally non-fouling mixture and hence avoiding any cleaning downtime.

Tests conducted when the above application had already been filed, as well as the awareness that this process could be implemented at no cost in any ceramic time manufacturing plant, led to the design of this additional process that can provide considerable throughput improvements as compared with prior art conglomeration processes.

Another problem of the prior art is that the cycle for the manufacture of surface covering products uses presses that operate by successive pressing steps, which limits the throughput rate due to the need of waiting for the end of each step before starting the next one.

This method of making surface covering products has also been used in the above mentioned patent no. ITPS20080008.

GB-A-2 197 173 discloses a process of making a mixture for the manufacture of surface covering or forming products using a discontinuous press in accordance with claim 1 and the first step of claim 8, making of a mixture.

### Objects of the invention

One object of the invention is to improve the state of the art.

Another object of the invention is to provide surface covering or forming products by means of a process for obtaining a mixture of inert materials, even derived from scraps, containing a predetermined amount of resin matrices as normally used in industrial dry painting, while ensuring that no deposit or scale remains on manufacturing equipment and plants upon curing of these resin matrices.

A further object of the invention is to provide a process of making a mixture for the manufacture of surface covering or forming products and a mixture obtained from such process, which reduce work cycle times as compared with the prior art.

A further object of the invention is to provide a process of making a mixture for the manufacture of surface covering or forming products and a mixture obtained from such process, which allow the introduction of reinforcement or heat insulating elements in the products, thereby making them more suitable for forming heat insulated covers and walls.

In one aspect, the invention provides a process of making a mixture for the manufacture of surface covering or forming products and a mixture obtained from such process, as defined in claim 1.

The process of making a mixture for the manufacture of surface covering or forming products, and the mixture obtained from this process afford the following advantages:
using resin matrices normally used in industrial dry painting, while ensuring that no deposit or scale remains on product manufacturing equipment and plants upon curing of these resin matrices;
reducing product manufacturing cycle times;

### Brief description of the drawings

Further characteristics and advantages of the invention will appear more clearly from the description of a process of making a mixture for the manufacture of surface covering or forming products which is disclosed hereinafter by way of example and without limitation.

### Embodiments of the invention

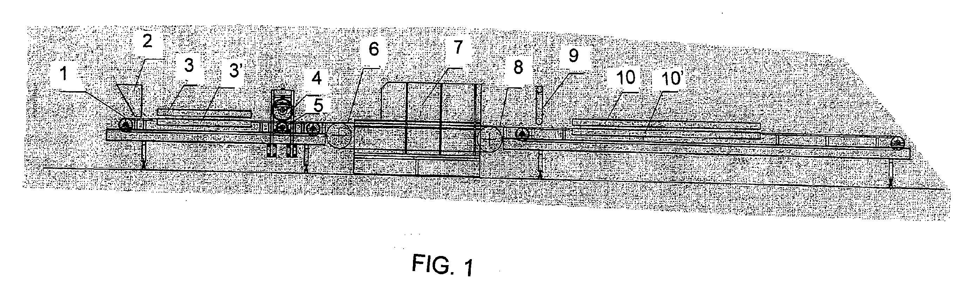

Referring to the Figure 1, a plant for manufacturing surface covering or forming products which implements a process for manufacturing the products of the invention is shown to comprise a conveyor 1 upon which, in a first station, a feeding tray 2 deposits a layer of a powdered mixture to make surface covering or forming products, which mixture is obtained upstream from the feeding tray 2 in a second mixing station, not shown.

Two opposed infrared ray emitters 3 and 3' are mounted along the conveyor 1, namely above and below the upper operating branch thereof, in a third pre-heating station, for pre-heating the mixture that passes therebetween on the conveyor 1.

A pre-compaction unit is located downstream from the two emitters 3 and 3', in a seventh pre-compaction station, and comprises a tamping roller 4 which rolls against an underlying counteracting roller 5.

The position of at least the tamping roller 4 is adjustable relative to the counteracting roller 5, to obtain a predetermined pressure on the layer of mixture moving therebetween.

After pre-compaction, the layer of mixture is transferred to the flexible surface 6 of a continuous press 7 which is located on a fourth pressing station and is equipped with an additional movable pressing surface (not shown) operating in synchronism with the surface 6 and with a surface that converges towards the latter at a predetermined convergence angle, to obtain a predetermined pressing load on the layer of mixture continuously moving therebetween.

As the layer of mixture is pressed by the continuous press 7, it is transferred to a further movable conveying surface 8 (which may also be a seamless extension of the flexible surface 6) and is conveyed thereby through another pair of infrared irradiation elements 10 and 10' located in a fifth irradiation station, which radiate heat up to a curing temperature of the resin matrix contained in the mixture.

According to a first possible embodiment of a process of making a mixture for the manufacture of surface covering or forming products, a mixture is obtained, which includes inorganic inert materials, such as quartz, marble, glass, ceramic scraps or else in powder or granule form, and a thermosetting electrostatic powder, of the type that is normally used in environmentally-friendly painting processes, with varnishes or paints, which mixture is stored in containers, such as a bin, for later use.

However, if immediate use is required, the mixture will be instantly prepared in a mixer apparatus, by the addition of a non-fouling liquid to obtain a slight moistening effect; this liquid may be, for example, water, like in the preparation of ceramic clay, to prevent air from being polluted by inhalable powder, during transport to the point of use and to make mixture compactable.

The amount of added thermosetting powder is 5% by weight or more, preferably about 10%.

The same amount of thermosetting powder is used to obtain thermoformable stone elements.

Furthermore, combinations of the two powders provide products with different technical properties, such as partial plastication to change the crystalline nature of the conglomerate.

Thermoplastic powders, such as acrylic powders and polyvinyl or polyurethane powders, may be added also as a suspension in the above mentioned moistening water.

Such slight moistening effect is required, like in the case of ceramic clay, to hold the mixture compacted during baking: nevertheless, moisture is gradually eliminated before melting of the curable resin.

Then, the mixture is directly introduced as a uniform layer into a forming drawer of a ceramic press, or onto an interposed metal sheet having a perfectly closed self-releasing surface, plated with chromium or nickel or previously treated with release agents, with a predetermined layer of electrostatic powdered paint being previously coated thereon.

The surface of the metal sheet may be also decorated with relief textures and the layer of electrostatic powdered paint may be deposited with the interposition of a series of silk screens for powders, to obtain multicolored decorative designs.

As the mixture of inert materials and binding powder is uniformly laid into the drawer, it is pressed and later removed and conveyed to a curing kiln with or without the interposition of the metal sheet tray.

In the curing kiln, generally of vertical type, temperature is gradually increased to 180-200°C and is maintained at such maximum designed value for a few minutes, whereupon a gradual cooling cycle is started.

At the exit of the curing kiln, a pick up means, normally a device equipped with a suction plate, picks up the product so formed, normally in the form of a conglomerate stone slab, whereas the metal sheet tray, if any, is recovered for later use.

This provides, the elimination of any fouling problem caused by the use of liquid resins in an amount required for conglomeration affords a much higher throughput than in prior art conglomeration processes, comparable to those of a ceramic production line.

A further advantage of the process of the invention is the lack of any fouling of the actuator means, even when the mixture has to be enriched with the binding resin matrix to obtain superior mechanical characteristics of the element being formed.

According to an embodiment of the invention, a homogeneous mixture is obtained, which includes in organic inert materials (such as quartz, marble, glass, ceramic scraps or else in powder or granule form, also in various combinations and with the addition of decorative inclusions of larger particle size) and a transparent or colored thermosetting powder, of the type that is normally in use in environmentally-friendly painting processes with electrostatic or gravity dry deposition, through perforated screens; this mixture may be collected in containers, such as bins, for later use.

However, if immediate use is required, like in the above described embodiment, the mixture will be prepared in a mixer apparatus, by the addition of a non-fouling liquid to obtain a slight moistening effect; this liquid may be water, like in the preparation of clay, to prevent air from being polluted by inhalable powder, during transport to the point of use and to allow mixture compaction and plastication.

The moistening liquid essentially comprises aqueous acrylic or vinyl suspensions to impart plasticity and enhance the grip of an upper inclined surface of a continuous press.

The amount of added thermosetting powder is of 4% to 20% by weight, depending on the use of transparent pure resin or colored powders; the thermosetting powder may be an epoxy resin, adapted to form interior surface covering products or a mixed epoxy-polyester or polyester resin to form exterior surface covering products.

Polyester resins are recommended for their high UV resistance, which makes them suitable for surface protection of architectural metals for outdoor use.

Using the ceramic processing method, a uniform layer of mixture is formed, possibly by combining various colored mixtures in predetermined amounts to obtain a marbled effect or textures in the mass, which layer is submitted to the action of a continuous compaction press, at a pressure of 50 to 100 kg/cm², or even more.

Then, the compacted mixture is directly exposed to a heat source, e.g. by being caused to pass through a fan kiln at a temperature of about 180°C - 200°C, and being continuously held at such temperature, as detected in the middle of the product section, for at least 10 minutes, and anyway for the time required for complete curing of the thermosetting powder matrix, as typically indicated by manufacturers.

According to a variant of the process, the mixture may be first exposed to lower temperatures, and then to the temperatures required for curing the thermosetting material, because the binding powder first softens as a thermoplastic material: this may provide products to be later used to cover curved or otherwise shaped elements.

According to the invention, prior to introduction of the mixture into the curing kiln, colored powders may be placed thereon by gravity, e.g. by means of screens ordinarily used for dry decoration of majolica, to form uniform backgrounds or ornamental designs.

The process of the invention may also include the introduction of fiber nets in the mixture, during layer formation, to reinforce the interior of the product or conglomerate slab: these nets may be unwound by one or more restricted-motion unwinders.

These unwinders can also, if needed, unwind metal sheets with thicknesses of a few tenths of millimeter, capable of receiving a known amount of thermosetting powder and an additional layer of mixture of inert materials and thermosetting powder deposited thereon electrostatically of by gravity, the latter being hence firmly attached to the product, after compaction and curing, to form a functional and decorative surface.

In this case, the products will be cut with an in-line cutting method, i.e. without stopping the translational motion of the layer of powders that has been cured by passing through the curing kiln.

The layer of mixed powders may be carried into the curing kiln by a Teflon®-coated glass fiber belt, appropriately stretched around drive and idle rollers, to define a plane, so that the product (in slab form) maintains perfect planarity when the resin softens and becomes liquid before irreversible curing; this kind of belt allows easy release of the cured product.

As an alternative to the above mentioned reinforcement fiber nets, the mechanical resistance of the elements may be also increased by dispersing loose fibers, of inorganic, organic, artificial or natural type, within the mixture.

Decorative inclusions resulting from partial surface grinding may include larger particles of colored minerals, colored glass, metals, heat-resistant plastic scrap materials, such as the polycarbonate used for making compact disks, which has a light decomposition power.

The mixture may be composed of sludge resulting from porcelain stoneware polishing or glass grinding, after making it anhydrous, with resin resulting from scraps from metal plasticization by electrostatic deposition, which comes into the air-purifying filters, which solves environmental impact problems of two different industries and provides a conglomerate at the same cost as simple surface decoration.

If such decoration is performed on the compacted slab with powdered paints, it may be performed also at a later time on the cured product (slab), by exposing it again to heat, after deposition of the decorative powder, which makes the process even more flexible in terms of decoration options.

Final effects, e.g. of chromium plating, may be obtained on the surface, by the use of metalized powders, and the product (slab) becomes highly functional as well as highly decorative, due to its characteristic of reflecting infrared heat radiation, when the product is used to cover surfaces of continuous façades of buildings in high-insolation countries.

The process of the invention affords another advantage in terms of safety and health of environmental operators, exposed in the prior art, to styrene monomer and organic peroxides, which are both known to be cancerogenic.

According to a further embodiment, a third process variant is provided.

In this third variant, the mixture is laid in a perfectly dry state, by being extracted using a conveyor belt, from a flush-filled forming drawer of a press having an adjustable transverse slot at the base and in the forward direction of the manufacturing cycle.

Then, the mixture is caused to reach the plastic state, by submitting it to a pre-heating step, at a temperature of 30°C to 80°C, or even more, which is obtained by placing a controlled infrared ray heat source above and below the conveyor belt that passes through the continuous press, without ventilation, at least in the first pre-heating section, to prevent raising of finer powders.

In this third variant, the belt conveyor may be omitted, by extending the closed-loop lower flexible steel surface at the entry side, and directly placing the mixture thereon.

However, if a belt conveyor, made of teflon-coated glass or kevlar fibers, is still provided, it may also not extend through the continuous press: nevertheless, in this case, the layer of mixture must be submitted, before being transferred into the continuous press, to the pressure of a large-diameter roller counteracting another roller placed under the belt; two compacted surface crusts will be thus formed, due to the softening of the binding plastic powder matrix, allowing loss-free transfer between the first conveyor belt and the lower flexible support plate of the continuous press, and later exchange, after pressing, between the lower flexible support plate of the press and the conveyor belt that is part of the curing dryer (or kiln).

The mixture pre-heating step may be carried out at a temperature even more than eighty degrees, for the pressed mixture to be later exposed to the curing heat cycle, in the curing kiln, with a higher starting temperature, and be able to reach the thermosetting temperature in a shorter path or at higher speed, but without ever exceeding the temperature of 150°C, before the pressing step, to never exceed the thermosetting temperature of the powdered resin of the type that is usually employed for metal painting, i.e. about 170°C for twenty minutes heating time, or 200°C for seven minutes, or a temperature of 100°C. when another type of resin is used, of the type employed in environmentally-friendly dry painting of MDF wood, whose thermosetting temperature is of about 120°C to 130°C.

When this resin powder matrix is used, the same method may be employed to also conglomerate wood dust or loose vegetable fibers or organic particles of different nature, such as thermoplastic scrap materials that have various different melting points and cannot be separated by density, or thermosetting, unrecyclable plastic scrap materials, such as polyester or epoxy glass-fiber reinforced plastic materials, or other composite materials, to obtain environmentally friendly formaldehyde-free thin fibrous panels.

Since the mixture is pressed at temperatures below the thermosetting temperature, slabs are obtained by cooling, which can be later submitted to thermoforming by softening and adaptation to gravity molds or molds with a vacuum membrane, and later heated to the thermosetting temperature for their shape to become irreversible.

For example, this will allow the provision of corrugated sheets or roofing tiles, steps with risers, kitchen tops with risers and curved front edge, kitchen or bathroom sinks, tops with integrated sinks, shower trays, bathtubs, seats, ornamental architectural elements, street furniture, etc.

For easier thermoforming of pressed, uncured slabs, the inert part of the mixture designed for this purpose preferably consists of transparent solid glass beads, of grain sizes from 0.05 mm to 5 mm, manufactured with low energy requirements, such as those sold under the name "SiLibeads", which increase the amount of resin powder matrix.

The use of solid and transparent glass beads also provides mass-decorated slab products, with marble-like veins allowing light to pass therethrough, like in highly valuable marbles, such as onyx, jade, alabaster or other translucent crystalline concretions.

This third variant of the process also allows the use of solid glass beads with a grain size of about 0.8 mm, dispersed in the same binding powder as used for simultaneous surface glazing, which is optionally deposited by means of a known gravity apparatus, such as a silk screen, on the pressed mixture, before introduction thereof into the thermoset curing kiln, thereby obtaining a light-reflecting finished surface of the slab product, like in road signs, that will provide, for instance in outdoor cladding, a wide range of night decorations for a continuous façade of a building.

Furthermore, all the details may be replaced by other technically equivalent parts.

Thus, any materials, shapes and sizes may be used depending on particular requirements, without departure from the scope of the following claims.

## Claims

1. A process of making a mixture for the manufacture of surface covering or forming products, comprising the steps of:
- making a mixture of granules and powders of inorganic inert materials including an amount of thermosetting resin powder, of colored or transparent type, possibly modified with a thermoplastic resin powder;
- uniformly flush-filling a forming drawer of a ceramic press with said mixture;
- exerting a compaction force by a cold pressing plate;
- removing the compacted mixture by an ejector means;
- exposing said compacted mixture to gradual heating at ambient pressure, in a horizontal or vertical kiln, to the melting and curing temperatures of the resin matrix;
- maintaining said temperature for a curing time;
- gradually cooling said mixture with the cured resin matrix;
- removing the conglomerate stone product;
**characterized in that** before said uniformly flush-filling, it is further comprised the step of:
- moistening said mixture with water or an aqueous suspension of thermoplastic resin, if required, or with other evaporable non-fouling liquids.

2. A process as claimed claim 1, wherein:
- a metal sheet is laid on the bottom of a forming drawer, which has a perfectly closed self-releasing surface, plated with chromium or nickel or treated from time to time with release agents, whose surface structure, to be transferred to the surface of the element to be formed, may be smooth or textured, glossy or matt;
- previously coating a layer of electrostatic thermosetting powdered paint or varnish, possibly with the interposition of series of silk screens for powders, to create multicolored oriented designs;
- removing the cured stone product while simultaneously obtaining a finished surface, and
- returning said metal sheet to the operating cycle for reuse.

3. A process as claimed in claim 1 or 2, which includes conglomeration or dry inorganic inert particles and powders, with thermosetting curable resin powder matrices, unmodified or modified with thermoplastic resins, or with the addition of a moistening agent consisting of aqueous suspensions of these additives, while simultaneously forming the finished surface coated with powdered paints or varnishes, which have been previously electrostatically deposited on the metal sheet die, with or without the interposition of series of silk screens for powders, while excluding the combined action of pressure and heat, and carrying out these treatments separately.

4. A process as claimed in any preceding claim, wherein said dry inorganic inert particles or powders include mixtures of quartz, marble, mother-of pearl, glass, scrap ceramic, possibly in various combinations thereof, with colored or transparent thermosetting resin matrices, possibly modified with thermoplastic materials, of the type as used in the field of environmentally-friendly coating with electrostatic powders of epoxy, polyester, acrylic, polyurethane or thermoplastic origin.

5. A process as claimed in any preceding claim, wherein said resin matrix comprises transparent or colored temperature-sensitive electrostatic powder, representing an amount equal or higher than 5% and preferably substantially 10%

6. A process as claimed in any preceding claim, wherein said resin matrix comprises fine thermoplastic powder, to obtain thermoformable stone products.

7. A process as claimed in any preceding claim, wherein a surface of said products is smoothed to obtain a smooth decorative surface obtained by painting during formation thereof.

8. A process of making a mixture for the manufacture of surface covering or forming products comprising the steps of:
- making a mixture of granules and powders of inorganic inert materials including an amount of thermosetting resin powder, of colored or transparent type, possibly modified with a thermoplastic resin powder;
- moistening said mixture with water or an aqueous suspension of thermoplastic resin, if required, or with other evaporable non-fouling liquids;
- continuously forming the products by compacting a layer of said mixture with continuous pressing means, thereby obtaining a compacted layer of mixture, said mixture comprising inert powders and granules with a thermosetting powder as used in environmentally-friendly dry painting of metals or other surfaces of different nature, by electrostatic or gravity deposition using screen means of predetermined mesh size,
- exposing said mixture to a heat source, at predetermined thermoset curing temperature and time, and
- cutting said layer before or after said exposure, to predetermined sizes and in a cutting direction.

9. A process as claimed in claim 8, wherein said continuous pressing means include flexible, closed-loop opposed pressing surfaces, which converge towards each other in a pressing direction.

10. A process as claimed in any one of claims 8, 9, wherein said heat source comprises at least one dryer apparatus which is designed to heat said compacted layer of mixture at thermoset curing temperatures of about 200°C and for a curing time of about 10 minutes, said compact layer of mixture being conveyed through said dryer apparatus by a conveyor belt made of materials like Teflon®-coated glass fibers.

11. A process as claimed in any claim from 8 to 10, wherein said mixture includes components selected from the group comprising:
inert materials consisting of powders and granules of quartz, marble, glass, chamotte, grinding sludge treated to become anhydrous, possibly in various combinations thereof, representing an amount from 80% to 96%, and
binding powder, representing an amount from 20% to 4%.

12. A process as claimed in claim 11, wherein said inert materials may be replaced by materials selected from the group comprising colored inclusions, having a grain size of about one millimeter or more, of minerals and ceramic glasses, mother-of-pearl, metals, mirrors, crystal fragments known as Swarovsky, heat resistant plastic such as the polycarbonate used for making compact disks.

13. A process as claimed in claims 8 or 9, wherein said continuous pressing means comprise a press having a support surface for supporting said layer and a pressing surface cooperating with said support surface and being inclined to converge towards the latter in said pressing direction, said pressure exerting a compaction pressure of 50 kg/cm² or more.

14. A process as claimed in any claim from 8 to 13 , wherein, prior to the formation of said layer, said mixture is moistened by moistening means comprising aqueous acrylic/vinyl suspensions or other compatible binders, preferably from 40% to 50%, said acrylic/vinyl suspensions representing an amount from 2% to 5%, and UV-resistant organic liquid dyes, generally dispersed in polyalcohol

15. A process as claimed in any claim from 8 to 14, wherein product reinforcement means are introduced into said layer, said reinforcement means comprising at least one net of organic or inorganic fibers, unwound and stretched by coil means and placed in such stretched state at such a depth as to allow said mixture to pass therethrough at a melted state, during formation of said layer, before said pressing, or optionally loose fiber dispersed in said mixture.

16. A process as claimed in any claim from 8 to 15 wherein, prior to said formation, a smooth or textured metal sheet element having a thickness of a few tenths of millimeters, and made of stainless steel / anodized aluminum / other smooth or embossed metals or alloys, which has been coated beforehand with a 50 micron - 100 micron layer of binding powder by electrostatic or gravity deposition is placed below said mixture layer, to obtain products with a decorated surface at the same time as they are formed.

17. A process as claimed in any claim from 8 to 16 wherein, prior to said exposure, dry coating paints are deposited by gravity above said compacted mixture, with screen means.

18. A process as claimed in any claim from 8 to 17 wherein at least one technical and/or ornamental surface is formed at the same time as said conglomeration, which is capable of reflecting infrared rays wherein said technical and/or ornamental surface may be coated on: ceramic products known as biscuits.

19. A process as claimed claim 8, wherein between said formation and said exposure, said compacted mixture layer is pre-heated to temperatures below said thermoset curing temperature, so that said compacted layer can be plasticized; optionally coating said pre-heated compacted layer with a surface coat; placing said pre-heated compacted layer at the plastic state on gravity moulding means, thereby obtaining shaped products.

20. A process according to claim 8, **characterized in that** said mixture comprises a loose stratification of materials selected between:
- a first group of inert materials selected from the group comprising quartz, marble, granite, basalt, scrap ceramic, possibly in combination with sludge resulting from porcelain stoneware polishing, after making it anhydrous, recycled glass, solid transparent glass beads, porous foam glass, silica sand, in combination with dyes, and a thermosetting resin powder matrix as used in environmentally-friendly dry coating of indoor or outdoor architectural metals, of epoxy, polyester, acrylic, polyurethane origin, or a mixture of epoxy and polyester resin powders, or of polyurethane origin, also suitable for gravity or electrostatic deposition on the surfaces to be protected; and
- a second group of inert materials, selected from: wood dust or loose vegetable fibers, also combined together, or particles and fibers of scrap thermoplastic materials that have various different melting points and cannot be separated by density, or thermosetting, unrecyclable plastic scrap materials, selected from the group of polyester or epoxy glass-fiber reinforced plastic materials, or other composite materials, or a thermosetting resin powder matrix as used in dry painting of wood-fiber panels.

21. A process according to claims 8 and 20, **characterized in that** said exposing comprises:
- depositing said mixture as a layer on a flat conveyor means;
- exposing such mixture to infrared ray irradiation, at first with no hot air, to increase the temperature of the surface layers from a base temperature, or ambient temperature to at least one first temperature of 30-80 degrees Celsius and more, for partial melting of the resin matrix;
- thermoforming, by said irradiation, said melted layer from the powder state to a plastic state, to enhance adhesion to a flexible pressing surface of a continuous press.

22. A process as claimed in anyone of claims 8-21 wherein, before pressing by said continuous pressing means, said loose and softened mixture is pre-compacted between a first pressing roller and a second counteracting roller, a passage of predetermined width being defined between the outer surfaces thereof, for said mixture to become workable.

23. A process as claimed in claim 22, wherein a softening temperature of said mixture is 100°C or lower, said loose mixture being deposited at a softened, pre-compacted state on molds having specially shaped surfaces, so that said loose mixture may adhere, in its softened, pre-compacted state, to said specially shaped surfaces.

24. A process as claimed in any claim from 20 to 23 wherein, prior to said curing, an additional layer of resin matrix, as used for mass conglomeration, combined with color oxides or synthetic pigments is deposited on said pre-compacted and softened mixture, to obtain a decorative and/or technical glazing surface.

## Patentansprüche

1. Ein Verfahren zum Herstellen einer Mischung für die Herstellung von Oberflächenbeschichtung oder Formerzeugnissen mit den Schritten:
- Herstellen einer Mischung aus Granulaten und Pulvern aus anorganischen, inerten Materialien, die eine Menge an aushärtendem Harzpulver des farbigen oder transparenten Typs beinhalten, das möglicherweise modifiziert ist mit einem thermoplastischem Harzpulver,
- gleichmäßiges glattes Füllen eines Einschubs einer keramischen Presse mit dieser Mischung,
- Ausüben einer Kompaktierkraft mittels einer kalten Pressplatte,
- Entfernen der kompaktierten Mischung mittels einer Auswurfeinrichtung,
- Aussetzen der kompaktierten Mischung einer allmählichen Erwärmung bei Umgebungsdruck in einem horizontalen oder vertikalen Ofen bis zu den Schmelz- und Aushärttemperaturen der Harzmatrix,
- Beibehalten der Temperatur während einer Aushärtzeit,
- allmähliches Abkühlen der Mischung mit der ausgehärteten Harzmatrix,
- Entfernen des zusammen gesetzten Steinerzeugnisses, **dadurch gekennzeichnet, dass** vor dem gleichmäßigen glatten Füllen zudem
der Schritt des Befeuchtens der Mischung mit Wasser oder einer wässrigen Lösung aus thermoplastischem Harz, falls erforderlich, oder mit anderen verdampfbaren, sich nicht absetzenden Flüssigkeiten vorgesehen ist.

2. Verfahren gemäß Anspruch 1, **dadurch gekennzeichnet, dass**
- ein Metallblech auf den Boden des Formeinschubs gelegt ist, das eine perfekt geschlossene, selbst lösende Oberfläche aufweist, die beschichtet ist mit Chrom oder Nickel oder von Zeit zu Zeit behandelt wird mit Lösemitteln, dessen Oberflächenstruktur, die zu übertragen ist auf die Oberfläche des zu formenden Elements, glatt sein kann oder strukturiert, glänzend oder matt,
- vorheriges Beschichten mit einer Lage elektrostatischer, pulvriger Farbe oder Lack, möglicherweise mit der Zwischenpositionierung von Reihen von Seidenschirmen für Pulver, zur Schaffung von mehrfarbigen, ausgerichteten Mustern,
- Entfernen des ausgehärteten Steinerzeugnisses bei gleichzeitigem Erhalt einer bearbeiteten Oberfläche, und
- Zurückbringen des Metallblechs zu dem Betriebszyklus zur Wiederverwendung.

3. Verfahren gemäß Anspruch 1 oder 2, das die Ansammlung von trockenen, anorganischen, inerten Partikeln und Pulvern beinhaltet mit thermisch aushärtenden Farben aus Harzpulver, unverändert oder verändert mit thermoplastischen Harzen oder mit dem Zusatz von Feuchtigkeitsmitteln, die aus wässrigen Lösungen dieser Zusätze bestehen, wobei sie gleichzeitig die bearbeitete Oberfläche bilden, die beschichtet ist mit Farben oder Lacken aus Pulver, die vorher elektrostatisch abgesetzt worden sind auf der Matrix des Metallblechs mit oder ohne die Zwischenpositionierung von Reihen von Seidenschirmen für Pulver, wobei die zusammen gesetzte Wirkung von Druck und Wärme ausgeschlossen ist und diese Handlungen getrennt durchgeführt werden.

4. Verfahren gemäß einem vorhergehenden Anspruch, **dadurch gekennzeichnet, dass** die trockenen, anorganischen, inerten Partikel oder Pulver Mischungen aus Quarz, Marmor, Perlmut, Glas, Abfallkeramik, möglicherweise in deren verschiedenen Zusammensetzungen beinhalten mit farbigen oder durchsichtigen, aushärtenden Harzmatrizen, möglicherweise verändert mit thermoplastischen Materialien der Art, die verwendet werden auf dem Gebiet der umweltverträglichen Beschichtung aus Pulvern des Ursprungs aus Epoxy, Polyester, Acryl, Polyurethan oder Thermoplasten.

5. Verfahren gemäß einem vorhergehenden Anspruch, **dadurch gekennzeichnet, dass** die Harzmatrix transparentes oder farbiges, temperaturabhängiges, elektrostatisches Pulver enthält, das einen Anteil gleich oder höher als 5% und vorzugsweise im Wesentlichen 10% bildet.

6. Verfahren gemäß einem vorhergehenden Anspruch, **dadurch gekennzeichnet, dass** die Harzmatrix feines thermoplastisches Pulver umfasst, um wärmeformbare Steinerzeugnisse zu erhalten.

7. Verfahren gemäß einem vorhergehenden Anspruch, **dadurch gekennzeichnet, dass** eine Oberfläche der Erzeugnisse geglättet wird, um eine glatte, dekorative Oberfläche zu erhalten, die erhalten wird mittels streichen während deren Bildung.

8. Verfahren zum Herstellen einer Mischung für die Herstellung von Oberflächenbeschichtung oder Formerzeugnissen mit den Schritten:
- Herstellen einer Mischung aus Granulaten und Pulvern aus anorganischen, inerten Materialien, die eine Menge an aushärtendem Harzpulver des farbigen oder transparenten Typs beinhalten, das möglicherweise modifiziert ist mit einem thermoplastischem Harzpulver,
- Befeuchten der Mischung mit Wasser oder einer wässrigen Lösung aus thermoplastischem Harz, falls erforderlich, oder mit anderen verdampfbaren, sich nicht absetzenden Flüssigkeiten,
- kontinuierliches Bilden der Erzeugnisse mittels Verdichten einer Lage dieser Mischung mit kontinuierlichen Druckeinrichtungen, wobei eine verdichtete Lage der Mischung erhalten wird und die Mischung inerte Pulver und Granulate aufweist mit einem aushärtenden Pulver wie es verwendet wird beim umweltverträglichen, trockenen Streichen von Metallen oder anderen Oberflächen unterschiedlicher Art mittels elektrostatischer- oder Schwerkraftablagerung unter Verwendung von Schirmeinrichtungen mit vorbestimmter Maschengröße,
- Aussetzen der Mischung einer Wärmequelle bei vorbestimmter, aushärtender Aushärttemperatur und -zeit,
- Schneiden der Lage vor oder nach dem Aussetzen auf vorbestimmte Größen und in einer Schneidrichtung.

9. Verfahren gemäß Anspruch 8, **dadurch gekennzeichnet, dass** die kontinuierlichen Druckeinrichtungen biegsame, sich in geschlossener Schleife gegenüber liegende Druckflächen aufweisen, die zueinander konvergieren in einer Druckrichtung.

10. Verfahren gemäß einem der Ansprüche 8, 9, **dadurch gekennzeichnet, dass** die Wärmequelle mindestens eine Trocknervorrichtung aufweist, die ausgelegt ist die kompakte Lage der Mischung auf aushärtende Aushärttemperaturen von ungefähr 200° C und für eine Aushärtzeit von ungefähr 10 Minuten zu erwärmen, wobei die kompakte Lage der Mischung gefördert wird durch die Trocknervorrichtung mittels eines Fördergurts, der aus Materialien wie Teflon ® beschichteten Glasfasern hergestellt ist.

11. Verfahren gemäß einem Anspruch von 8 bis 10, **dadurch gekennzeichnet, dass** die Mischung Zusätze enthält, die aus der Gruppe ausgewählt sind, die aufweist:
inerte Materialien aus Pulvern und Granulaten aus Quarz, Marmor, Glas, Schamotte, Mahlschlamm, der behandelt ist, um anhydrisch zu werden, möglicherweise in unterschiedlichen Kombinationen davon, die einen Anteil von 80% bis 96% darstellen, und
Bindepulver, das einen Anteil von 20% bis 4% darstellt.

12. Verfahren gemäß Anspruch 11, **dadurch gekennzeichnet, dass** die inerten Materialien ersetzt werden können durch Materialien, die aus der Gruppe ausgewählt sind, die farbige Einschlüsse umfassen, ein Korngröße von ungefähr einem Millimeter oder mehr haben, aus Mineralien und keramischen Gläsern, Perlmut, Metallen, Spiegeln, Kristallfragmenten, die als Swarovsky bekannt sind, hitzebeständigem Kunststoff, wie das Polykarbonat, das verwendet wird zur Herstellung von Compact Discs.

13. Verfahren gemäß den Ansprüchen 8 oder 9, **dadurch gekennzeichnet, dass** die kontinuierlichen Druckeinrichtungen eine Presse umfassen, die eine Stützfläche aufweist zum Tragen der Lagen und eine Druckfläche, die mit der Stützfläche zusammen wirkt und geneigt ist zum Konvergieren auf die Letztere zu in dieser Druckrichtung, wobei der Druck einen Kompaktierungsdruck von 50 kg/cm² oder mehr ausübt.

14. Verfahren gemäß einem der Ansprüche 8 bis 13, **dadurch gekennzeichnet, dass** vor der Bildung der Lage die Mischung befeuchtet wird durch Befeuchtungseinrichtungen, die wässrige acrylische/vinyle Lösungen oder andere kompatible Binder aufweisen, vorzugsweise von 40% bis 50%, wobei die acrylisch/vinylen Lösungen einen Anteil von 2% bis 5% darstellen und UV feste, organische, flüssige Matrizen, die im Allgemeinen aufgelöst sind in Polyalkohol.

15. Verfahren gemäß einem der Ansprüche 8 bis 14, **dadurch gekennzeichnet, dass** Verstärkungseinrichtungen für die Erzeugnisse in die Lagen eingesetzt sind, wobei die Verstärkungseinrichtungen mindestens ein Netz aus organischen oder anorganischen Fasern umfasst, ungebunden und gestreckt durch Spuleneinrichtungen und angeordnet in derart gestrecktem Zustand in derartiger Tiefe, dass es dieser Mischung möglich ist dort hindurch zu gelangen in einem geschmolzenen Zustand während der Bildung der Lage, vor dem Pressen oder möglicherweise lose Fasern aufgelöst in der Mischung.

16. Verfahren gemäß einem der Ansprüche 8 bis 15, **dadurch gekennzeichnet, dass** vor der Bildung ein glattes oder strukturiertes Metallblechelement mit einer Dicke von einigen wenigen zehntel Millimetern und hergestellt aus rostfreiem Stahl / eloxiertem Aluminium / anderen glatten oder getriebenen Metallen oder Legierungen, die vorher beschichtet wurden mit einer 50 Micron - 100 Micron Lage aus Bindepulver mittels elektrostatischer oder Schwerkraft -Ablagerung unter der Lage der Mischung angeordnet wird, um Erzeugnisse zu erhalten mit einer dekorierten Oberfläche zur selben Zeit, zu der diese gebildet werden.

17. Verfahren gemäß einem der Ansprüche 8 bis 16, **dadurch gekennzeichnet, dass** vor der Exponierung trockene Beschichtungsfarben mittels Schwerkraft abgelagert werden über der kompaktierten Mischung mit Siebeinrichtungen.

18. Verfahren gemäß einem der Ansprüche 8 bis 17, **dadurch gekennzeichnet, dass** mindestens eine technische und/oder geschmückte Oberfläche zur selben Zeit gebildet wird wie die Ansammlung, die in der Lage ist infrarote Strahlen zu reflektieren, wobei die technische und/oder geschmückte Oberfläche beschichtet werden kann auf keramischen Erzeugnissen, die als Biskuits bekannt sind.

19. Verfahren gemäß Anspruch 8, **dadurch gekennzeichnet, dass** zwischen der Bildung und der Exponierung die kompaktierte Mischung vorgewärmt wird auf Temperaturen unter der Härtetemperatur des Duroplasts, so dass die kompaktierte Lage plastifiziert werden kann, optional die vorgewärmte kompaktierte Lage mit einer Flächenbeschichtung beschichtet wird, anordnen der vorgewärmten kompaktierten Lage in dem plastischen Zustand auf Formeinrichtungen durch Schwerkraft, so dass geformte Erzeugnisse erhalten werden.

20. Verfahren gemäß Anspruch 8, **dadurch gekennzeichnet, dass** die Mischung eine lose Schichtung aufweist aus Materialien, die ausgewählt sind zwischen:
- einer ersten Gruppe aus inerten Materialien, die ausgewählt sind aus der Gruppe, die Quarz, Marmor, Granit, Basalt, Abfallkeramik, möglicherweise in Kombination mit Schlacke, die sich aus dem Polieren der Porzellan-Steinware ergibt, nachdem anhydritisch stellen, rezykliertes Glas, feste transparente Glasperlen, porösem Schaumglas, Siliziumsand in Kombination mit Farben und einer aushärtenden Harzpulvermatrix, wie es verwendet wird bei umweltverträglichem Trockenbeschichten von Architekturmetallen in oder außer Haus, einem Ursprung aus Epoxy, Polyester, Acryl, Polyurethan oder einer Mischung aus Harzpulvern aus Epoxy und Polyester oder von Ursprung aus Polyurethan, das auch geeignet ist für Ablagerung durch Schwerkraft oder Elektrostatik auf den Oberflächen, die geschützt werden sollen, und
- einer zweiten Gruppe aus inerten Materialien, die ausgewählt sind Holzstaub oder losen pflanzlichen Fasern, auch zusammen kombiniert, oder Partikeln und Fasern von thermoplastischen Materialien aus Abfall, die unterschiedliche Schmelzpunkte haben und nicht mittels Dichte getrennt werden können oder aushärtendes, nicht rezyklierbares Kunststoffmaterial aus Abfall, das ausgewählt ist aus der Gruppe der verstärkten Kunststoffmaterialien aus Polyester oder Epoxy-Glasfaser oder anderen Verbundmaterialien oder einer aushärtenden Harzpulvermatrix, die verwendet wird beim trockenen Streichen von Holzfaserplatten.

21. Verfahren gemäß den Ansprüchen 8und 20, **dadurch gekennzeichnet, dass** das Exponieren umfasst:
- Ablegen der Mischung als eine Lage auf einer flachen Fördereinrichtungen,
- Aussetzen der Mischung von Infrarotstrahlung, zunächst mit keiner heißen Luft, um die Temperatur der Oberflächenlagen von einer Grundtemperatur oder Umgebungstemperatur zu erhöhen auf mindestens eine erste Temperatur von 30 - 80 Grad Celsius und mehr zum teilweisen Schmelzen der Harzmatrix,
- Wärmeformen mittels der Bestrahlung der geschmolzenen Lage von dem Pulverzustand in einen plastischen Zustand, um die Anhaftung zu stärken zu einer biegsamen Druckfläche einer kontinuierlichen Presse.

22. Verfahren gemäß einem der Ansprüche 8 - 21, **dadurch gekennzeichnet, dass** die lose und erweichte Mischung vor dem Pressen mit den kontinuierlichen Druckeinrichtungen vorkompaktiert wird zwischen einer ersten Pressrolle und einer zweiten Gegenrolle, wobei ein Durchlass vorbestimmter Breite gebildet wird zwischen deren äußeren Oberflächen, damit die Mischung bearbeitbar wird.

23. Verfahren gemäß Anspruch 22, **dadurch gekennzeichnet, dass** eine Erweichungstemperatur der Mischung 100 ° C ist oder niedriger, wobei die lose Mischung abgelagert wird in einem weichen, vorkompaktierten Zustand auf Formen mit speziell geformten Oberflächen, so dass die lose Mischung in ihrem weichen, vorkompaktierten Zustand auf den speziell geformten Oberflächen anhaften kann.

24. Verfahren gemäß einem der Ansprüche 20 bis 23, **dadurch gekennzeichnet, dass** vor dem Härten eine zusätzliche Lage Harzmatrix , wie sie verwendet wird für Massenansammlungen, kombiniert mit Farboxiden oder synthetischen Pigmenten, abgelagert wird auf der vorkompaktierten und weichen Mischung, um eine dekorative und/oder technische Glasurfläche zu erhalten.

## Revendications

1. Procédé de préparation d'un mélange pour la fabrication de produits de formation ou revêtement de surfaces, comprenant les étapes de :
- préparer un mélange de granules et poudres de matières inertes inorganiques, comprenant une quantité de poudre de résine thermodurcissable, de type coloré ou transparent, éventuellement modifié avec une poudre de résine thermoplastique ;
- remplir uniformément à fleur un tiroir de presse céramique avec ledit mélange ;
- exercer une force de compactage avec une plaque de pression à froid ;
- retirer le mélange compacté par un moyen d'éjection ;
- exposer ledit mélange compacté à un chauffage progressif à pression ambiante, dans un four horizontal ou vertical, aux températures de fusion et de polymérisation de la matrice résineuse ;
- maintenir ladite température pour un temps de polymérisation ;
- refroidir progressivement ledit mélange avec la matrice résineuse polymérisée ;
- retirer le produit en conglomérat pierreux ;
**caractérisé en ce qu'**une étape ultérieure est prévue avant ladite étape de remplir uniformément à fleur, à savoir :
- humidifier ledit mélange avec de l'eau ou une suspension aqueuse de résine thermoplastique, si nécessaire, ou avec d'autres liquides évaporables qui n'encrassent pas.

2. Procédé selon la revendication 1, dans lequel :
- une tôle est posée au fond d'un tiroir de presse, qui a une surface auto-démoulante, plaquée de chrome ou de nickel ou traitée le cas échéant avec des agents de démoulage, dont la structure de surface, destinée à se transférer à la surface de l'élément à former, peut être lisse ou texturée, brillante ou opaque ;
- une couche de vernis ou peinture thermodurcissable électrostatique en poudre est appliquée préalablement, éventuellement avec l'interposition d'une série d'écrans sérigraphiques pour poudres, pour créer des dessins orientés en plusieurs couleurs ;
- retirer le produit en conglomérat pierreux, et obtenir ainsi une surface finie, et
- renvoyer ladite tôle au cycle opératoire pour être réutilisée.

3. Procédé selon la revendication 1 ou 2, qui comprend la conglomération de particules et poudres inertes inorganiques sèches, avec des matrices résineuses thermodurcissables polymérisables en poudre, non modifiées ou modifiées avec des résines thermoplastiques, ou avec l'addition d'un agent humectant constitué par des suspensions aqueuses de ces additifs, tout en formant la surface finie revêtue de vernis ou peintures en poudre, préalablement appliqués par dépôt électrostatique sur la matrice en tôle, avec ou sans interposition de séries d'écrans sérigraphiques pour poudres, tout en excluant l'action combinée de pression et chaleur, et effectuant ces traitement séparément.

4. Procédé selon n'importe laquelle des revendications précédentes, dans lequel lesdites particules ou poudres inertes inorganiques sèches comprennent des mélanges de quartz, marbre, nacre, verre, déchets de céramique, éventuellement en combinaisons différentes, avec des matrices résineuses thermodurcissables colorées ou transparentes, du type utilisé pour le revêtement écologique avec des poudres électrostatiques d'origine époxydique, polyester, polyuréthanique ou thermoplastique.

5. Procédé selon n'importe laquelle des revendications précédentes, dans lequel ladite matrice résineuse comprend une poudre électrostatique thermosensible transparente ou colorée, en quantité égale ou supérieure à 5%, et de préférence essentiellement 10%.

6. Procédé selon n'importe laquelle des revendications précédentes, dans lequel ladite matrice résineuse comprend une poudre thermoplastique fine, pour obtenir des produits pierreux thermoformables.

7. Procédé selon n'importe laquelle des revendications précédentes, dans lequel une surface desdits produits est lissée pour obtenir une surface décorative lisse réalisée par peinture lors de sa formation.

8. Procédé de préparation d'un mélange pour la fabrication de produits de formation ou revêtement de surfaces, comprenant les étapes de :
- préparer un mélange de granules et poudres de matières inertes inorganiques, comprenant une quantité de poudre de résine thermodurcissable, de type coloré ou transparent, éventuellement modifié avec une poudre de résine thermoplastique ;
- humidifier ledit mélange avec de l'eau ou une suspension aqueuse de résine thermoplastique, si nécessaire, ou avec d'autres liquides évaporables qui n'encrassent pas.
- former en continu les produits par compactage d'une couche dudit mélange par des moyens de pression continue, en obtenant ainsi une couche compactée mélange, ledit mélange comprenant des poudres et des granules inertes avec une poudre thermodurcissable du type utilisé pour le revêtement écologique de métaux ou d'autres surfaces de nature différente, par dépôt électrostatique ou par gravité, avec l'emploi de moyens de tamisage ayant une ouverture de maille prédéfinie,
- exposer ledit mélange à une source de chaleur, à une température et pour un temps prédéfinis de thermodurcissement, et
- couper ladite couche avant ou après ladite exposition, à dimensions prédéfinies et selon une direction de coupe.

9. Procédé selon la revendication 8, dans lequel lesdits moyens de pression continue comprennent des surfaces de pression flexibles opposées à boucle fermée, convergeant l'une vers l'autre dans une direction de pression.

10. Procédé selon n'importe laquelle des revendications 8, 9, dans lequel ladite source de chaleur comprend au moins un appareil sécheur conçu pour chauffer ladite couche compactée mélange à des température de polymérisation par thermodurcissement de 200°C environ, et pendant un temps de polymérisation de 10 minutes environ, ladite couche compactée de mélange étant transportée à travers ledit appareil sécheur par un transporteur à bande constitué par un matériau comme des fibres de verre revêtues de Teflon®.

11. Procédé selon n'importe laquelle des revendications 8 à 10, dans lequel ledit mélange comprend des constituants choisis dans le groupe comprenant:
- des matières inertes constituées par des poudres et des granules de quartz, marbre, verre, chamotte, boue de moulage traitée pour devenir anhydre, éventuellement en plusieurs combinaisons différentes, en quantité comprise entre 80% et 96%, et
- liant en poudre, en quantité comprise entre 20% et 4%.

12. Procédé selon la revendication 12, dans lequel lesdites matières inertes peuvent être remplacées par des matériaux choisis dans le groupe comprenant des inclusions colorées, ayant une granulométrie égale ou supérieure à un millimètre environ, de minéraux et verres céramiques, nacre, métaux, miroirs, fragments cristallins connus sous le nom de Swarovsky, plastique thermorésistante comme le polycarbonate utilisé pour fabriquer des disques compacts.

13. Procédé selon la revendication 8 ou 9, dans lequel lesdits moyens de pression continue comprennent une presse ayant une surface de support de ladite couche et une surface de pression coopérant avec ladite surface de support et étant inclinée pour converger vers celle-ci dans ladite direction de pression, ladite pression exerçant une pression de compactage égale ou supérieure à 50 kg/cm².

14. Procédé selon les revendications 8 à 13 dans le quel, avant la formation de ladite couche, ledit mélange est humidifié par des moyens d'humidification comprenant des suspensions aqueuses acryliques/vinyliques ou d'autres liants compatibles, de préférence en quantité comprise entre 40% et 50%, lesdites suspensions acryliques/vinyliques correspondant à une quantité comprise entre 2% et 5% et des colorants liquides organiques résistants aux UV, généralement dispersés dans un polyalcool.

15. Procédé selon n'importe laquelle des revendications 8 à 14, dans lequel des moyens de renforcement sont introduits dans ladite couche, lesdits moyens de renforcement comprenant au moins un réseau de fibres organiques ou inorganiques, déroulées et étirées par des moyens de bobinage et placée dans cette condition étirée à une telle profondeur à permettre le passage dudit mélange à l'état fondu à travers celles-ci, lors de la formation de ladite couche, avant ladite pression ou optionnellement des fibres lâches dans ledit mélange.

16. Procédé selon n'importe laquelle des revendications 8 à 15 dans lequel, avant ladite formation, un élément en tôle lisse ou texturé ayant une épaisseur de quelques dizaines de millimètres, en acier inox /aluminium anodisé / autres métaux ou alliages, préalablement revêtu avec une couche de liant en poudre ayant une épaisseur de 50 micron - 100 micron, par dépôt électrostatique ou par gravité, est placé sous ladite couche de mélange, pour obtenir des produits avec une surface décorée en même temps qu'ils sont formés.

17. Procédé selon n'importe laquelle des revendications 8 à 16 dans lequel, avant ladite exposition, des peintures sèches sont déposées par gravité au-dessus dudit mélange compacté, par des moyens sérigraphiques.

18. Procédé selon n'importe laquelle des revendications 8 à 17, dans lequel au moins une surface technique et/ou ornementale, capable de réfléchir les rayons infrarouges, est formée en même temps que ladite conglomération, dans lequel ladite surface technique et/ou ornementale peut être appliquée sur des produits céramiques connus comme biscuits.

19. Procédé selon la revendication 8 dans lequel, entre ladite formation et ladite exposition, ladite couche compactée de mélange est préchauffée à des températures inférieures à ladite température de polymérisation par thermodurcissement, de manière à permettre la plastification de ladite couche compactée; ladite couche compactée pré-chauffée étant optionnellement revêtue avec une couche de surface; ladite couche compactée préchauffée étant placé à l'état plastique sur des moyens de moulage par gravité, pour ainsi obtenir des produits façonnés.

20. Procédé selon la revendication 8, **caractérisé en ce que** ledit mélange comprend une stratification lâche de matériaux choisis entre :
- un premier groupe de matières inertes choisies dans le groupe comprenant quartz, marbre, granite, basalte, déchets de céramique, éventuellement en association avec la boue obtenue du polissage de la porcelaine, après un traitement pour la rendre anhydre, verre recyclé, billes de verre solides transparentes, verre mousse poreux, sable silicieux, en association avec des colorants, et une matrice de résine thermodircissante en poudre du type utilisé dans le revêtement écologique de métaux de construction pour intérieurs et extérieurs, d'origine époxydique, polyester, acrylique, polyuréthanique ou un mélange de poudres de résines époxy et polyester, ou d'origine polyuréthanique, indiquées également pour le dépôt par gravité ou électrostatique sur les surfaces à protéger ; et
- un second groupe de matières inertes, choisies parmi: farine de bois ou fibres végétales lâches, éventuellement associées entre elles, ou particules et fibres de déchets de matières thermoplastiques qui ont des points de fusion différents et ne peuvent pas être séparés par densité, ou déchets de matières plastiques thermodurcissables non recyclables, choisies dans le groupe de matières plastiques polyester ou époxy renforcées avec fibres de verre, ou d'autres matériaux composites, ou une matrice en poudre de résine thermodurcissable du type utilisé dans la peinture à sec de panneaux de fibres de bois.

21. Procédé selon les revendications 8 et 20, **caractérisé en ce que** ladite exposition comprend les étapes de :
- déposer ledit mélange en couche sur un moyen transporteur plat :
- exposer ledit mélange à un rayonnement infrarouge, d'abord sans air chaud, pour augmenter la température des couches de surfaces à partir d'une température de base, ou température ambiante, jusqu'au moins à une première température égale ou supérieure à 30 - 80 degrés centigrades, pour fondre partiellement la matrice résineuse ;
- thermoformer ladite couche fondue par ce rayonnement de l'état de poudre à l'état plastique, pour améliorer l'adhérence à une surface flexible de pression d'une presse continue.

22. Procédé selon n'importe laquelle des revendications 8 à 21 dans lequel, avant la pression par lesdits moyens de pression continue, ledit mélange lâche et ramolli est pré-compacté entre un premier rouleau de pression et un second rouleau antagoniste, un passage de largeur prédéterminée étant défini entre les surfaces extérieures de ceux-ci, pour rendre le mélange usinable.

23. Procédé selon la revendication 22, dans lequel une température de ramollissement est égale ou inférieure à 100°C, ledit mélange lâche étant déposé à l'état ramolli et pré-compacté sur des moules ayant des surfaces spécialement façonnées, pour que ledit mélange lâche puisse adhérer dans son état ramolli et pré-compacté, auxdites surfaces façonnées.

24. Procédé selon n'importe laquelle des revendications 20 à 23 dans lequel, avant ladite polymérisation, une ultérieure couche de matrice résineuse, du type utilisé pour la conglomération en masse, en association avec des oxydes colorants ou des pigments synthétiques, est déposée sur ledit mélange pré-compacté et ramolli, pour obtenir une surface de glaçage décorative et/ou technique.
